# FASCICULE DE BREVET EUROPEEN

(11) **EP 1 440 269 B1**
(45) Date de publication et mention de la délivrance du brevet: **14.09.2005**
(21) Numéro de dépôt: 02795324.9
(22) Date de dépôt: 16.10.2002
(51) Int. Cl.: F16L 11/16

(54) **CONDUITE TUBULAIRE FLEXIBLE POUR LE TRANSPORT D'HYDROCARBURES A CARCASSE CONSTITUEE D'UN ELEMENT ALLONGE ENROULE AGRAFE PAR UN FEUILLARD**
FLEXIBLE RÖHRENFÖRMIGE LEITUNG FÜR DEN TRANSPORT VON KOHLENWASSERSTOFFEN MIT EINEM GERIPPE BESTEHEND AUS EINEM MIT EINEM EISENBAND GEHEFTETEN LÄNGLICHEN ELEMENT
FLEXIBLE TUBULAR PIPE FOR HYDROCARBON TRANSPORT WITH CARCASS CONSISTING OF AN ELONGATED ELEMENT STAPLED WITH A BAND IRON

(30) Priorité: 24.10.2001 FR 0113748
(43) Date de publication de la demande: 28.07.2004
(73) Titulaire: Technip France, 92400 Courbevoie (FR)
(72) Inventeur: JUNG, Patrice, Joel, Louis, F-76940 La Mailleraye sur Seine (FR); DUPOIRON, François, F-76360 Barentin (FR)
(74) Mandataire: Bertrand, Didier
(86) Numéro de dépôt international: PCT/FR2002/003547
(87) Numéro de publication internationale: WO 2003/036152

(56) Documents cités:
- EP-A- 0 429 357
- DE-C- 164 391
- FR-A- 465 136
- US-A- 5 778 941
- US-A- 6 145 546

## Description

La présente invention concerne une conduite tubulaire flexible pour le transport d'hydrocarbures, du type comportant au moins une carcasse, une gaine d'étanchéité intérieure, des nappes d'armure de traction et une gaine d'étanchéité extérieure. Une telle conduite, appelée couramment "rough bore" lorsque la carcasse constitue la couche intérieure de la conduite, est notamment utilisable pour le transport d'hydrocarbures dans le cadre d'installations de production pétrolière sous-marines. Elle peut éventuellement comprendre en plus de ces couches, d'autres couches particulières, comme une voûte de pression, une frette, des gaines intermédiaires, etc.

La carcasse est, comme le rappellent les recommandations API 17J de l'American Petroleum Institute, une couche tubulaire, en principe interne, formée d'un enroulement métallique agrafé et destinée essentiellement à empêcher l'écrasement ou l'effondrement ("collapse") de la gaine d'étanchéité interne ou de la conduite en l'absence de pression interne dans la conduite sous l'effet de la pression externe, de la pression engendrée par les armures de traction, voire des charges mécaniques extérieures (notamment lors de la pose, dans les organes de préhension). La carcasse peut parfois constituer une couche externe pour protéger la surface extérieure de la conduite.

La carcasse est réalisée traditionnellement en feuillard résistant à la corrosion, profilé généralement selon une forme en section voisine d'un S couché et enroulée de manière à réaliser des spires agrafées les unes aux autres. Afin d'améliorer les performances d'une carcasse, diverses propositions ont déjà été faites. On pourra se reporter ainsi au document EP 0 429 357 de la Demanderesse, montrant une carcasse dont le feuillard constitutif comprend une onde formant une structure d'appui qui augmente la hauteur de la section et donc l'inertie, améliorant la résistance à l'écrasement de la carcasse. Selon le document FR 2 780 482, également au nom de la Demanderesse, les qualités mécaniques de la carcasse sont améliorées grâce à un écrouissage préalable du feuillard constitutif.

Pour les carcasses actuelles en feuillard agrafé (S couché) du type décrit dans le document EP 0 429 357, les caractéristiques mécaniques de résistance à l'écrasement sont limitées pour un diamètre de conduite donné. En effet, le diamètre de la conduite impose pour le profil en S considéré, une épaisseur maximum du feuillard utilisable. Cette épaisseur est limitée en raison notamment du profil en S qu'il est impossible d'enrouler sur un diamètre donné pour des épaisseurs de feuillard plus épaisses que l'épaisseur limite. L'inertie du profil réalisant la carcasse étant notamment fonction de l'épaisseur globale de celle-ci et donc de l'épaisseur du feuillard utilisé, celle-ci présente un maximum pour un diamètre donné (et donc une épaisseur maximum de feuillard utilisable). De ce fait, pour un diamètre de conduite donné, la carcasse que l'on peut utiliser présente une limitation de ses caractéristiques de résistance à l'écrasement (inertie). Comme le calcul d'une carcasse dépend directement de la pression hydrostatique existant à la profondeur où la conduite est utilisée, celle-ci étant calculée pour pouvoir résister à la pression hydrostatique qui serait susceptible de régner dans l'annulaire de la conduite si la gaine était percée, chaque diamètre de conduite présente une limitation dans sa profondeur possible d'utilisation, limitation liée à la résistance de sa carcasse.

Par ailleurs, ces carcasses réalisées en S agrafés présentent également d'autres problèmes, qui sont notamment :
- un problème d'inertie lié à un coefficient de remplissage moyen,
- un problème de coût lié au coût de la matière première employée (généralement de l'acier inox pour résister à la corrosion),
- un problème de pertes de charge dues aux déjoints qui peuvent être importants entre spires adjacentes de l'enroulement et qui créent des discontinuités dans la surface de la face interne de la carcasse. Ces problèmes sont d'autant plus importants que l'on souhaite avoir une forte inertie et qu'on utilise un feuillard de forte épaisseur.

Il existe des propositions alternatives à l'enroulement de feuillard pour la réalisation d'une carcasse; notamment l'utilisation de fils de forme en Zeta ou en Teta agrafés par un U, comme montré dans le document FR 2 772 293, mais cette dernière solution s'avère chère et pose d'autres problèmes, en particulier un problème de poids pour l'utilisation en grande profondeur.

De même, il existe dans l'art antérieur des carcasses réalisées en fil spiralé mais qui ne conviennent aucunement au type d'applications envisagées ici, notamment en raison de leur incapacité à assurer localement une inertie minimum et donc à garantir la résistance à l'écrasement que l'on recherche pour la carcasse.

Ainsi, les carcasses connues de l'art antérieur ne sont pas satisfaisantes lorsqu'on souhaite réaliser des conduites destinées aux grandes profondeurs. Elles présentent soit des problèmes de coût et de poids (fil de forme), soit des problèmes de limitation dans le diamètre de la conduite utilisable pour une profondeur donnée (feuillard en S agrafé) ainsi que des problèmes de pertes de charge.

Le but de l'invention est donc de proposer une conduite flexible dont la carcasse soit réalisée selon une solution alternative qui ne présente pas les inconvénients des solutions précitées.

Ce but est atteint selon l'invention grâce à une conduite tubulaire flexible pour le transport d'hydrocarbures, du type comportant, au moins une carcasse, une gaine intérieure, des nappes d'armure de traction et une gaine extérieure, caractérisé en ce que la carcasse est constituée par un enroulement d'au moins un élément allongé métallique à forte section résistant à la corrosion et agrafé par un feuillard fin résistant à la corrosion.

Par élément allongé, on entend un élément compact de type fil ou tube, par opposition à un élément plat de type feuillard. La section du fil peut être ronde, rectangulaire ou carrée et le rapport de sa hauteur sur sa largeur est supérieur à 0,1.

L'association d'un élément allongé et d'un feuillard permet l'utilisation d'un feuillard plus fin pour l'obtention d'une inertie similaire à celle obtenue avec le feuillard en S agrafé ; ainsi pour un diamètre de conduite donné, on peut réaliser un enroulement à beaucoup plus forte inertie avec un élément allongé à forte section associé à un feuillard fin puisque selon l'invention l'inertie n'est plus limitée par l'épaisseur du feuillard liée au diamètre d'enroulement. Ainsi, l'association du feuillard et d'un élément allongé permet pour un diamètre de conduite donné d'augmenter sensiblement l'inertie de la carcasse que l'on peut réaliser par rapport aux carcasses connues. On augmente ainsi pour chaque diamètre de conduite sa capacité à supporter les grandes profondeurs.

Le prix du fil inox étant inférieur au prix du feuillard inox, l'association de l'élément allongé et du feuillard fin permet de réduire les coûts de la carcasse par rapport à une carcasse en feuillard inox de l'art antérieur. De plus, il est possible d'utiliser à la place du fil inox d'autres matériaux résistant à la corrosion tels qu'un fil en acier gainé dont le prix de revient est encore plus attractif, réduisant ainsi d'autant le coût de la carcasse. Le revêtement du fil peut être de tout type et notamment un revêtement thermoplastique, comme par exemple en polyéthylène, en polyamide ou en polyfluorure de vynilidène (PVDF) ; il peut également être réalisé en thermodurcissable tel que l'époxy ou autre.

Il est également possible d'utiliser des fils non métalliques tels qu'en matériau composite (fibres de carbone ou verre, résines). Ces fils ont l'avantage d'être plus légers et permettent ainsi un allègement de la structure qui est important, notamment pour des conduites conçues pour la grande profondeur.

Dans la combinaison des éléments de l'invention, l'élément allongé sert d'une part à assurer en partie l'inertie de la section en apportant sa matière et d'autre part à garantir la hauteur de la section. Il permet au feuillard de venir prendre appui sur lui de manière à garantir la forme et le profil du feuillard, permettant ainsi audit feuillard de contribuer pleinement à augmenter l'inertie de la section. Le feuillard assure l'agrafage pour maintenir le jeu entre spires entre un minimum et un maximum, garantissant ainsi localement une inertie minimale de la carcasse ; il assume également une grande contribution à l'inertie de la carcasse. Il permet de plus de réduire sensiblement les problèmes de pertes de charge liés aux déjoints.

L'utilisation d'un feuillard fin permet de cintrer le feuillard avec des rayons de courbure beaucoup moins importants qu'avec les feuillards utilisés dans les carcasses antérieures. Ainsi, comme le feuillard fin présente des rayons de pliage bien plus faibles, les pertes de charge liées aux déjoints qui existaient au niveau de la face interne de la carcasse, notamment en raison des rayons de courbure élevés des spires de feuillard adjacentes, sont réduites grâce à l'invention.

L'enroulement est de type hélicoïdal vrai, avec un angle d'enroulement inférieur à 90°. Un enroulement avec un angle d'enroulement de 90° par rapport à l'axe de la conduite, c'est-à-dire constitué d'anneaux de feuillard et d'anneaux faits de l'élément allongé, serait un cas extrême qui sortirait du cadre de l'invention.

L'élément allongé est de préférence un fil ou un tube en inox, en acier gainé (par une gaine plastique, par exemple en thermoplastique de type fluorure de polyvinylidène -PVDF-, polyéthylène ou polyamide), en acier revêtu (acier "claddé", c'est-à-dire plaqué d'un métal tel que le titane ou le nickel), en matériau non métallique tel qu'un matériau composite par exemple.

La section du fil est de préférence ronde mais peut être différente, notamment carrée, rectangulaire ou autre.

La section du feuillard est de préférence en S arrondi mais peut être différente, notamment en S carré. Autrement dit, la section du feuillard après profilage peut présenter une forme arrondie en S couché mais peut également être pliée avec des rayons de courbure faibles en certains points seulement, donnant ainsi au profil une forme dite en S carré.

On peut combiner les fils ronds aux feuillards en S carrés.

D'autres avantages et caractéristiques seront mis en évidence à la lecture de la description qui suit, en référence aux dessins schématiques annexés sur lesquels :
La figure 1 est une vue en perspective d'une conduite de type "rough bore", à laquelle s'applique l'invention,
La figure 2 est une vue schématique agrandie d'une section longitudinale de carcasse de l'art antérieur, réalisée par enroulement de feuillard en S,
La figure 3 est une vue schématique agrandie d'une section longitudinale de carcasse, selon un premier mode de réalisation de l'invention,
La figure 4 est une vue schématique agrandie d'une section longitudinale de carcasse, selon un deuxième mode de réalisation de l'invention,
La figure 5 est une vue schématique agrandie d'une section longitudinale de carcasse, selon un troisième mode de réalisation de l'invention,
La figure 6 est une vue schématique agrandie d'une section longitudinale de carcasse, selon un quatrième mode de réalisation de l'invention,
La figure 7 est une vue schématique agrandie d'une section longitudinale de carcasse, selon un cinquième mode de réalisation de l'invention,
La figure 8 est une vue schématique agrandie d'une section longitudinale de carcasse, selon un sixième mode de réalisation de l'invention,
La figure 9 est une vue schématique agrandie d'une section longitudinale de carcasse, selon un septième mode de réalisation de l'invention.

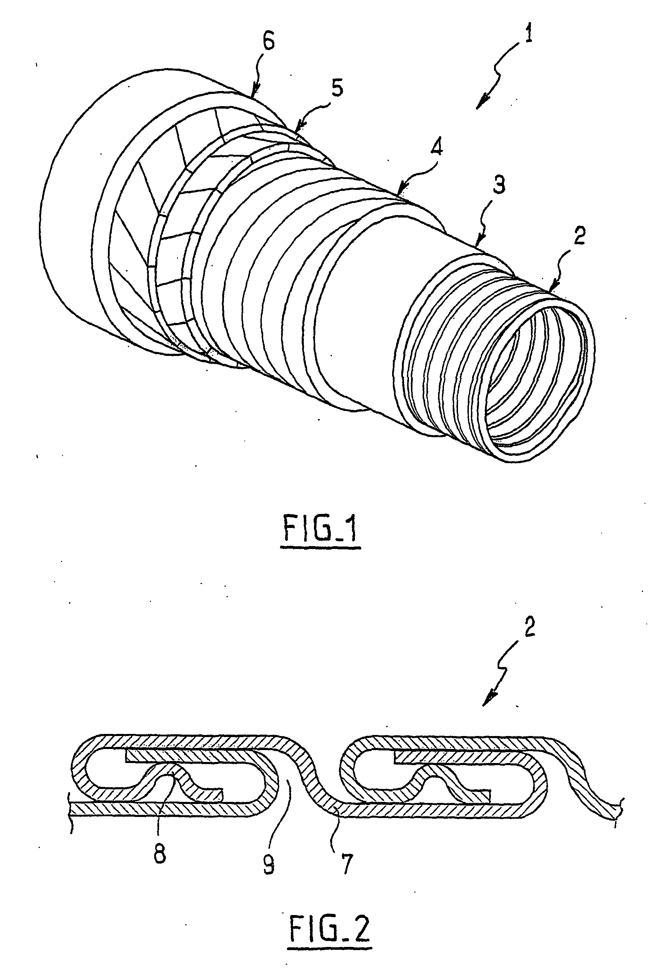

La conduite flexible 1 représentée figure 1 comprend de l'intérieur vers l'extérieur :
- une carcasse 2 constituée d'un enroulement métallique agrafé qui sert à empêcher l'écrasement de la conduite sous la pression externe,
- une gaine d'étanchéité interne 3, réalisée en matière plastique généralement polymère, résistant à l'action chimique du fluide à transporter,
- une voûte de pression 4 résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I,
- au moins une nappe 5 (et généralement au moins deux nappes croisées) d'armures de traction enroulées à pas long ; l'angle d'armage mesuré sur l'axe longitudinal de la conduite est par exemple sensiblement égal à 55°, et
- une gaine 6 de protection et d'étanchéité externe en polymère.

La voûte de pression, destinée essentiellement à résister à la pression interne n'est pas nécessaire dans toutes les situations et, compte tenu du surcoût qu'elle engendre, on préfère utiliser une conduite sans voûte de pression chaque fois que les circonstances le permettent. L'invention s'applique à un cas comme à l'autre.

La figure 2 montre la constitution d'une carcasse 2 connue par le document EP 0 429 357, faite de l'enroulement hélicoïdal d'un feuillard 7 formé en S aplati, muni d'une onde d'appui 8. Les déjoints 9 apparaissant entre les spires adjacentes sont la cause de perte de charge au niveau de l'écoulement de fluide dans la conduite. L'épaisseur du feuillard 7 est généralement égale ou supérieure à 2 mm.

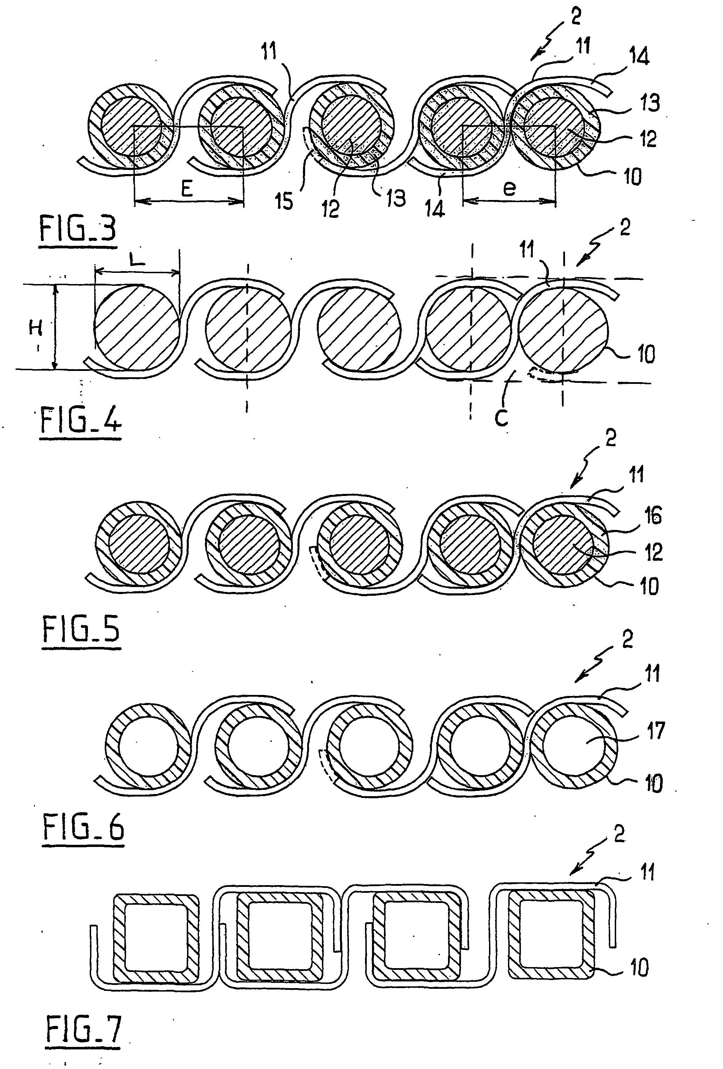

Les figures 3 à 7 représentent divers modes de réalisation de carcasse comprenant un fil ou tube 10 agrafé au moyen d'un feuillard mince 11 à section en S.

Dans la figure 3, le fil 10 est un fil rond à âme 12 d'acier et gaine 13 de plastique. Le feuillard 11 a une section en S rond dont les deux ailes 14 se terminent par des retours qui peuvent être faibles et peu enveloppants, comme représenté en traits pleins, ou éventuellement un peu plus enveloppants autour du fil 10, comme représenté à titre d'exemple par le prolongement 15 en pointillés. Dans les deux cas, le feuillard 11 agrafe les fils 10 en permettant un certain jeu, nécessaire pour la souplesse de la conduite flexible. Selon l'invention, l'épaisseur du feuillard 11 est inférieure à celle des feuillards utilisés dans l'art antérieur ; elle est avantageusement comprise entre 0,5 mm et 1,5 mm et peut être choisie égale à 1 mm.

On entend par feuillard mince (ou fin), un feuillard dont l'épaisseur est avantageusement inférieure à 0,2 fois la hauteur totale du profil (hauteur de la carcasse) et de préférence inférieure à 0,1 fois cette hauteur. Le profil transversal de l'élément allongé présente avantageusement une largeur supérieure ou égale à sa hauteur (L/H 1, cf. figure 4) et le coefficient de remplissage (mesuré sur un pas et égal au rapport des aires occupées par l'enveloppe du fil 10 et le feuillard 11 au sein d'une cellule C telle que celle représentée figure 4 délimitée par les tirets) de l'ensemble feuillard mince - élément allongé à forte section est supérieur à 0,4 et est avantageusement compris entre 0,4 et 0,85. On peut noter que la section transversale de l'élément allongé représente au moins 60% du remplissage (section totale) du profil global (feuillard + fil) de la carcasse.

Dans un mode particulier de réalisation, l'écartement entre fils peut aller d'un écartement minimal "e" de 14 mm à un écartement maximal "E" de 17 mm.

La figure 4 ne diffère de la figure 3 que par le fait que le fil 10 est en matériau résistant à la corrosion tel qu'en acier inoxydable ou en certains alliages (nickel, titane, ...)

Dans la figure 5, le fil 10 est un fil plaqué à âme 12 en acier et revêtu d'un revêtement 16 résistant à la corrosion, comme par exemple en titane ou autre. Dans ce cas, le feuillard est avantageusement de la même nature que le revêtement utilisé.

Dans la figure 6, l'élément allongé 10 est un tube en acier inox, "claddé" ou gainé plastique par exemple, dont l'intérieur 17 peut servir à véhiculer des liquides ou des gaz, ou à passer un câble électrique.

Dans la figure 7, l'élément allongé 10 est à section carrée et le feuillard 11 présente une section en S carré après profilage.

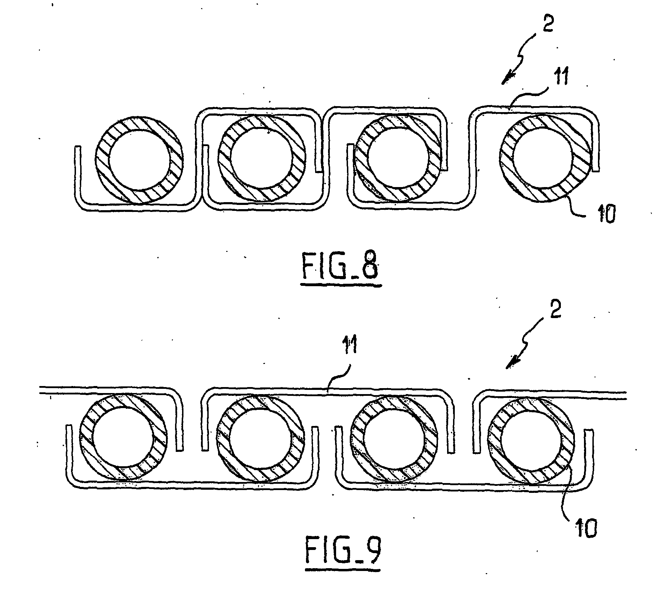

Dans la figure 8, l'élément allongé 10 est rond mais le feuillard 11 présente une section en S carré après profilage.

Selon la figure 9, les éléments allongés 10 sont agrafés par un feuillard 11 en U carré sous forme de deux couches intérieure et extérieure imbriquées dans les spires, avec décalage d'une spire d'une couche à l'autre.

Dans les différents modes de réalisation illustrés de l'invention, l'élément allongé présent eun porfil transversal rond ou carré. Bien entendu, la forme du profil transversal de l'élément allongé peut également être ovoïde ou rectangulaire sans pour autant sortir du champ de protection de l'invention.

## Revendications

1. Conduite tubulaire flexible (1) pour le transport d'hydrocarbures, du type comportant au moins une carcasse (2), une gaine intérieure (3), des nappes (5) d'armure de traction et une gaine extérieure (6), **caractérisée en ce que** la carcasse (2) est constituée par un enroulement d'au moins un élément allongé métallique à forte section (10) résistant à la corrosion et agrafé par un feuillard (11) fin résistant à la corrosion.

2. Conduite selon la revendication 1, **caractérisée en ce que** l'élément allongé (10) est un fil en acier gainé.

3. Conduite selon la revendication 1, **caractérisée en ce que** l'élément allongé (10) est choisi parmi les fils et les tubes de section ronde et carrée, réalisés en acier inox, acier revêtu par un matériau résistant à la corrosion.

4. Conduite selon l'une quelconque des revendications 1 à 3, **caractérisée en ce que** le feuillard (11) est un feuillard d'acier inoxydable dont la section après profilage est en S rond ou carré.

5. Conduite selon l'une quelconque des revendications 1 à 4, **caractérisée en ce que** l'épaisseur du feuillard (11) est comprise entre 0,5 mm et 1,5 mm.

6. Conduite selon l'une quelconque des revendications 1 à 5, **caractérisée en ce que** l'épaisseur du feuillard (11) est inférieure à 0,2 fois la hauteur totale de la carcasse (2).

## Patentansprüche

1. Schlauchrohrleitung (1) für die Beförderung von Kohlenwasserstoffen, die mindestens einen Unterbau (2), einen Innenmantel (3), Zugeinlagen (5) und einen Außenmantel (6) aufweist, **dadurch gekennzeichnet, dass** der Unterbau (2) aus einer Wicklung von mindestens einem korrosionsbeständigen gestreckten Metallelement mit einem großen Querschnitt (10) besteht und mit einem korrosionsbeständigen schmalen Stahlband (11) zusammengeheftet wird.

2. Leitung nach Anspruch 1, **dadurch gekennzeichnet, dass** das gestreckte Element (10) ein ummantelter Stahldraht ist.

3. Leitung nach Anspruch 1, **dadurch gekennzeichnet, dass** das gestreckte Element (10) unter runden und vierkantigen Drähten und Rohren ausgewählt wird, die aus rostfreiem Stahl, einem mit einem korrosionsbeständigen Werkstoff beschichteten Stahl,ausgeführt werden.

4. Leitung nach einem der Ansprüche 1 bis 3, **dadurch gekennzeichnet, dass** das Stahlband (11) ein Band aus rostfreiem Stahl ist, das nach der Profilierung einen runden oder vierkantigen Querschnitt in S-Form hat.

5. Leitung nach einem der Ansprüche 1 bis 4, **dadurch gekennzeichnet, dass** die Dicke des Stahlbands (11) 0,5 mm bis 1,5 mm beträgt.

6. Leitung nach einem der Ansprüche 1 bis 5, **dadurch gekennzeichnet, dass** die Dicke des Stahlbands (11) 0,2-mal kleiner ist als die Gesamthöhe des Unterbaus (2).

## Claims

1. A flexible tubular pipe (1) for transporting hydrocarbons, of the type comprising at least a carcass (2), an inner sheath (3), tensile armour plies (5) and an outer sheath (6), **characterized in that** the carcass (2) is formed by a winding of at least one corrosion-resistant elongate metal element (10) of large cross section and interlocked by a thin corrosion-resistant metal strip (11).

2. The pipe as claimed in claim 1, **characterized in that** the elongate element (10) is a sheathed steel wire.

3. The pipe as claimed in claim 1, **characterized in that** the elongate element (10) is chosen from wires and tubes of round and square cross section, made of stainless steel, or steel clad with a corrosion-resistant material.

4. The pipe as claimed in any one of claims 1 to 3, **characterized in that** the strip (11) is a stainless steel strip, the cross section of which after profiling is in the form of a round or square S.

5. The pipe as claimed in any one of claims 1 to 4, **characterized in that** the thickness of the strip (11) is between 0.5 mm and 1.5 mm.

6. The pipe as claimed in any one of claims 1 to 5, **characterized in that** the thickness of the strip (11) is less than 0.2 times the total height of the carcass (2).
